# EUROPEAN PATENT APPLICATION

(11) **EP 4 650 666 A1**
(43) Date of publication of application: **19.11.2025**
(21) Application number: 24176746.6
(22) Date of filing: 17.05.2024
(51) Int. Cl.: F24C 15/02, F24C 15/34, B64D 11/04

(54) **DOOR FOR AIRCRAFT GALLEY OVEN WITH EXPANDABLE INSULATION**

(71) Applicant: B/E Aerospace, Inc., Winston-Salem, NC 27105 (US)
(72) Inventor: PANJER, Frederik Adrian Stephan, 3958BW Maarsbergen (NL)
(74) Representative: Dehns

(57) **Abstract**

There is provided herein a door for an aircraft galley oven including: a frame; an external panel fixed to the frame; an internal panel selectively moveable proximally and distally with respect to the frame between a retracted position and an extended position; and a reversibly compressible insulation layer between the external panel and the internal panel and fixed to the external panel and the internal panel, wherein the compressible insulation layer is compressed when the internal panel is in the retracted position and expanded when the internal panel is in the extended position. There is also provided an aircraft galley oven including such a door.

## Description

### TECHNICAL FIELD

The present disclosure relates to aircraft galley ovens, and in particular to a door for use with such an oven of an aircraft galley.

### BACKGROUND

Aircraft galleys are fitted with a variety of apparatus and devices for, among other things, providing food and beverages to passengers of aircraft.

One such aircraft galley apparatus, or aircraft galley insert, is an aircraft galley oven.

Aircraft galley ovens include insulation to ensure that heat remains in the oven while food is being warmed, heated, or cooked, and thus increases efficiency of the oven. Typically, a higher volume of insulation leads to a greater thermal efficiency of the oven.

However, particularly in aircraft galleys, space is limited and so there is a balance between thermal efficiency of the oven, and space efficiency of the space used.

Some aircraft galley ovens include a layer of insulation mounted within the door of the oven. However, in order to provide space for the insulation in the door, the door needs to be made thicker. In some circumstances a thicker door is undesirable, in particular due to encroachment into the space in front of the oven when the door is open, i.e., the galley space directly into which a user may remove items (e.g., food trays) from the oven. A thicker door provides limitations on the size of trays that can be inserted and removed from the oven at a door opening angle of about 90°, as well as reducing the overall available space for the user when the door is open.

There is a desire to address this problem, while maintaining effective insulation for the oven.

### SUMMARY

From one aspect, there is provided a door for an aircraft galley oven including: a frame; an external panel fixed to the frame; an internal panel selectively moveable proximally and distally with respect to the frame between a retracted position and an extended position; and a reversibly compressible insulation layer between the external panel and the internal panel and fixed to the external panel and the internal panel, wherein the compressible insulation layer is compressed when the internal panel is in the retracted position and expanded when the internal panel is in the extended position.

In some examples, the door includes a door handle configured for selectively latching and unlatching the door and for selectively opening and closing the door, wherein the selective movement of the internal panel is controlled by operation of the door handle.

In some examples, the door handle is operated by rotational movement, wherein the door includes: a shaft attached to the door handle and rotatable with the door handle, the shaft extending through the external panel; a barrel attached to the internal panel, the barrel extending toward the external panel and sized to slidably receive the shaft; a slide bearing attached to the external panel or the door frame, the slide bearing extending toward the internal panel and sized to slidably received the barrel; and a cylindrical cam mechanism including a helical groove disposed in a surface of the shaft and a pin fixed with respect to the internal panel extending through an opening in the slide bearing and into the groove for engagement therewith. Upon rotation of the door handle, the shaft rotates, which causes the helical groove to move the pin axially, and thereby the internal panel to move between the extended and retracted positions to expand and compress the reversibly compressible insulation layer respectively.

In some examples, the door includes a pin guide attached to the internal panel, the pin guide extending toward the external panel and supporting the pin.

In some examples, the door includes a bearing disposed in the external panel around the shaft for supporting the shaft.

In some examples, the door includes a latch mechanism including a latch rod configured to be driven by the handle to move axially along an axis of the latch rod when the handle is moved by a user, wherein the latch rod includes a linear cam mechanism. The linear cam mechanism includes: an angled feature disposed on the latch rod and angled with respect to the axis of the latch rod; and a follower protruding from the internal panel and configured to engage the angled feature such that upon axial movement of the latch rod, the follower and internal panel move proximally or distally between the extended and retracted position dependent on the direction of the axial movement of the latch rod.

In some examples, the angled feature includes a wedge affixed to the latch rod providing an angled surface, and wherein the linear cam mechanism further comprises a resilient member configured to bias the follower toward the external panel and accordingly bias the internal panel toward the retracted position.

In some examples, the angled feature comprises a track having retaining flanges, and the follower comprises a lug disposed within the track and retained therein by the retaining flanges.

In some examples, the door includes a linear solenoid actuator; a resilient member; and a user input for controlling the linear solenoid actuator. The selective movement of the internal panel is controlled by the linear solenoid actuator, the internal panel being moved to the retracted position when the linear solenoid actuator is energised and being moved to or held in the extended position by the resilient member when the linear solenoid actuator is de-energised.

In some examples, the door includes a linear solenoid actuator; a resilient member; and a user input for controlling the linear solenoid actuator. The selective movement of the internal panel is controlled by the linear solenoid actuator, the internal panel being moved to the extended position when the linear solenoid actuator is energised and being moved to or held in the retracted position by the resilient member when the linear solenoid actuator is de-energised.

In some examples, the door includes a door handle configured for selectively latching and unlatching the door and for selectively opening and closing the door, wherein the user input is controlled by operation of the door handle.

In some examples, the door includes an internal seal for sealing between the internal panel and the door frame when the internal panel is in the extended position, to provide a sealed door cavity delimited by the internal panel, the external panel and the door frame in which the reversibly compressible insulation layer is disposed.

In some examples, the door includes a secondary seal for sealing between the external panel and the internal panel when the internal panel is in the retracted position, to provide a sealed door cavity delimited by the internal panel, the external panel and the door frame in which the reversibly compressible insulation layer is disposed.

In some examples, the door includes: a plurality of guide pins affixed to one of the internal panel and the external panel distributed across said one of the internal panel and the external panel; and a plurality of guide slide bearings affixed to the other of the internal panel and the external panel, each of the plurality of guide slide bearings configured to slidably receive a respective one of the plurality of guide pins.

In some examples, when the internal panel is in the retracted position, the reversibly compressible insulation layer has a compressed thickness and when the internal panel is in the extended position, the reversibly compressible insulation layer has an expanded thickness. The expanded thickness is between 1.5 times the compressed thickness and 2 times the compressed thickness.

There is also provided an aircraft galley oven. The aircraft galley oven includes: a base panel; a top panel; a plurality of wall panels; an oven cavity defined by the base panel, the top panel, and the wall panels; the door of any of the above; a hinge, hinging the door to one of the plurality of wall panels or to the base panel or the top panel, such that the door is moveable between a closed position, closing the oven cavity, and an open position, opening the oven cavity; and a latch having a locked state and an unlocked state, wherein in the locked state the latch holds the door in the closed position and in the unlocked state the door is freely movable between the closed position and the open position. The oven is configured such that when the latch is in the unlocked state the internal panel is in the retracted position and when the latch is in the locked state the internal panel is in the extended position.

Any of the above features may be combined in any combination unless expressly stated otherwise.

### BRIEF DESCRIPTION OF DRAWINGS

Various embodiments of this disclosure will now be described by way of example only, with reference to the accompanying drawings in which:
Figure 1A is a schematic cross-sectional view of an aircraft galley oven with its door in an open position;
Figure 1B is a schematic cross-sectional view of the aircraft galley oven of figure 1A with its door in an closed position;
Figure 2A is an enlarged schematic view of part of the door with an internal panel in a retracted position;
Figure 2B is an enlarged schematic view of the part of the door of figure 2A with the internal panel in an extended position;
Figure 3A is an enlarged schematic view of one exemplary mechanism for selectively compressing an insulation layer in a compressed state;
Figure 3B is an enlarged schematic view of the exemplary mechanism for selectively compressing the insulation layer of figure 3A in an expanded state;
Figure 4 shows a part of the exemplary mechanism of figures 3A and 3B;
Figure 5 shows an alternative exemplary mechanism for selectively compressing the insulation layer;
Figure 6A shows an alternative exemplary mechanism for selectively compressing an insulation layer in a compressed state;
Figure 6B shows the mechanism of Figure 6A with the insulation layer in an expanded state;
Figure 7A shows an alternative exemplary mechanism for selectively compressing an insulation layer in a compressed state;
Figure 7B shows the mechanism of Figure 7A with the insulation layer in an expanded state;
Figure 8 is a schematic view of the door;
Figure 9 is a schematic cross-sectional view of a guide pin and a guide slide bearing; and
Figure 10 is a schematic illustration of an internal seal.

### DETAILED DESCRIPTION OF DRAWINGS

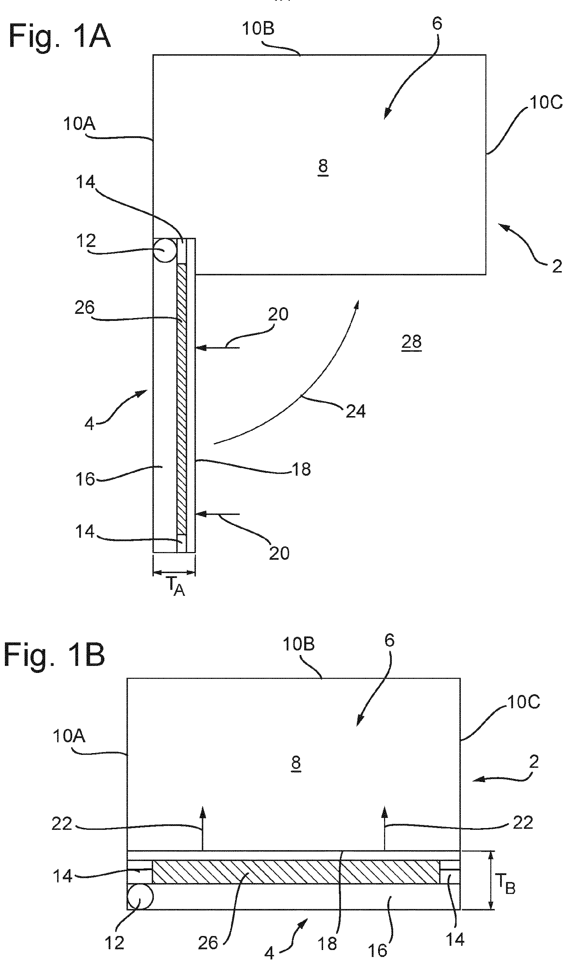

With reference to figures 1A to 8 there is described an aircraft galley oven, a door thereof, and details of certain features and mechanisms therein.

Figures 1A and 1B show an aircraft galley oven 2 (often referred to herein simply as the oven 2) having a door 4 in an open position and a closed position respectively. The view of this exemplary oven 2 is a cross-sectional view looking down from the top of the oven 2. In addition to the door 4, the oven 2 includes an oven cavity 6 defined by a top panel (not illustrated), a base panel 8, and a plurality of oven walls 10A, 10B, 10C. While the illustrated oven 2 has a cuboid shape, it is appreciated that ovens within the scope of the disclosure may have alternative shapes, and accordingly an alternative arrangement of oven walls, base panel and top panel.

The door 4 is rotatable about a hinge 12 between an open position (figure 1A) and a closed position (figure 1B). In the open position, the oven cavity 6 is accessible to users, such as aircraft cabin crew, for insertion or removal of items (e.g., food trays) into and from the oven cavity 6. In the closed position, the oven cavity 6 is not accessible, and retains heat. In other words, when the door 4 is in the open position, the oven 2 is open, and when the door 4 is in its closed position, the oven 2 is closed.

The oven 2 includes a number of elements not illustrated, such as heating elements, baffle plates, shelves, sensors, cameras, controls etc.

The door 4 has a frame 14, which provides the door 4 with structural rigidity. The frame 14 may be referred to as a door frame 14. The hinge 12 may be attached to the frame 14 or an integral part thereof.

The door 4 has an external panel 16 fixed to (e.g., adhered to or fastened to) the frame 14.

The door 4 has an internal panel 18 movably attached to the frame 14. The internal panel 18 is movably attached to the frame 14 in a proximal and distal direction. The proximal direction is represented by arrows 20 and the distal direction is represented by arrows 22. These directions are defined with respect to the external panel 16 of the door 4. That is, when the door moves, such as by rotation about the hinge 12 along the hinging direction represented by 24 the orientation of the proximal and distal directions 20, 22 also move with respect to the oven cavity 6.

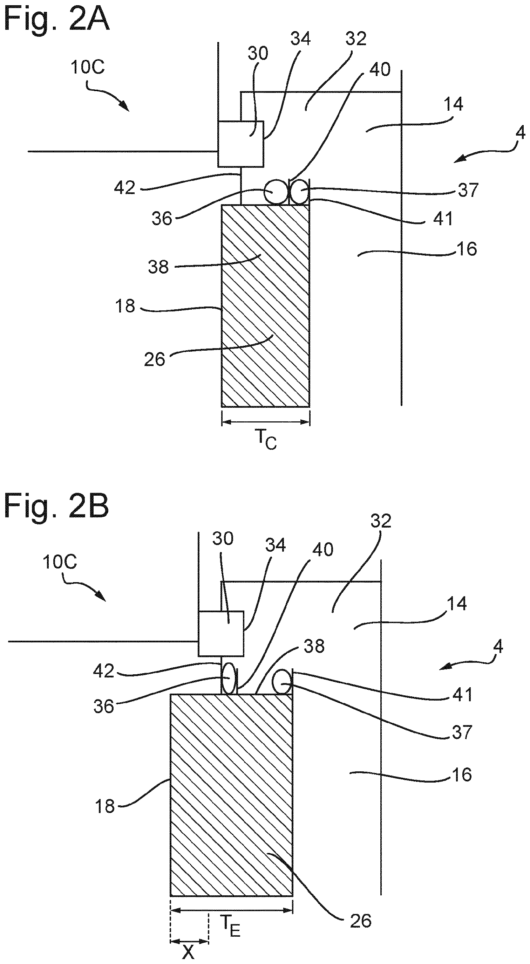

The stroke length X of the internal panel 18, which is the distance through which the internal panel is able to move in the proximal or distal directions 20, 22 is shown in figure 2B.

The limits of the movement of the internal panel 18 are described as: a retracted position, which is shown in figure 1A, and has the internal panel 18 moved into its most proximal position (along proximal direction 20); and an extended position, which is shown in figure 1B, and has the internal panel 18 moved into its most distal position (along distal direction 22).

Sandwiched between the internal panel 18 and the external panel 16 is a reversibly compressible insulation layer 26 (which may be referred to as the compressible insulation layer, the insulation layer, the insulation or an expandable insulation layer). The insulation layer 26 is fixed to, for example adhered to the internal panel 18 and the external panel 16. This fixing, or adhering is typically over a substantial majority of the compressible insulation 26. That is, for example, when adhesive is used, more than about 50%, or more narrowly, more than about 75%, or more than about 90% of each surface of the insulation layer 26 is in contact wetted with adhesive. This is in contrast to use of a few adhesive spots, and ensures that, when expanded, the majority of the insulation 26 expands, rather than only the parts of the insulation 26 in the vicinity of fixed areas thereof.

The insulation layer 26 may be made of any suitable material that is compressible and expandable, wherein the insulation provides more thermal insulation in its expanded state. For example, the insulation layer 26 may be made of microfiber blankets of insulation (such as Microlite^{™} fiber insulation blankets.

When the internal panel 18 is in the retracted position the compressible insulation layer 26 is compressed, i.e., it is in a compressed state, and when the internal panel 18 is in the extended position, the compressible insulation layer 26 is expanded, i.e., it is in an expanded state. In the compressed state, the door 4 has a reduced thickness T_{A} as compared to an increased thickness T_{B} in the expanded state. As such, the door 4 in the compressed state encroaches on less aircraft galley space 28. In the expanded state, the door 4 has a larger thickness of insulation layer 26 (see expanded thickness T_{E} in figure 2), which provides more thermal insulation than the insulation layer 26 would provide in its compressed state.

Figures 2A and 2B illustrate further details of the door 4. Each of figures 2A and 2B illustrate the door 4 in its closed position, but they differ in the state of the internal panel 18 and insulation layer 26 as shown. Figure 2A shows the internal panel 18 in the retracted position and the insulation layer 26 in the compressed state; and figure 2B shows the internal panel 18 in the extended position and the insulation layer 26 in its expanded state. As marked on the figures the insulation layer 26 has a compressed thickness T_{C} in the compressed state (figure 2A) and an expanded thickness T_{E} in the expanded state. The thicknesses Tc, T_{E} shown in the figures are only exemplary. The difference in thickness T_{E} - T_{C} is equal to the stroke length X of the internal panel 18.

The insulation layer 26 may have a compressed thickness (T_{E}) of between about 5 mm to about 20 mm, more narrowly about 8 mm to about 15 mm, or about 10 mm. The insulation layer 26 may have an expanded thickness (T_{E}) of between about 7 mm to about 50 mm, more narrowly, between about 13 mm and 30 mm, or about 20 mm.

The expanded thickness (T_{E}) may be between 1.3 times and 2.5 times the compressed thickness (T_{C}), or more narrowly, between about 1.5 times and 2 times, for example 1.7 times. The exact thicknesses and ratio is determined by the thermal insulation properties of the insulation layer 26 material, and the compressibility of the insulation layer material. When the expanded thickness (T_{E}) is more than 2 times the compressed thickness (Tc) a mechanism for movement of the internal panel 18 may include a telescopic or concertinaed arrangement, but may still use the same mechanism as discussed below for actuation, i.e., a cylindrical cam mechanism with a helical groove.

As can also be seen in these cross-sectional figures, the oven 2 includes an oven cavity seal 30 which is configured to engage with a perimeter 32 of the door 4 and with the wall panels 10A, 10C of the oven 2. The oven cavity seal 30 also engages with the top panel and the base panel 8 of the oven 2 to provide a sealed oven cavity 6 when the door 4 is in the closed position. The illustrated oven cavity seal 30 is a ring seal with a square cross section, and is set into a recess 34 in the door 4; however, it is appreciated that other shapes or locations of seal are considered. For example, a W-seal could be used, and/or the seal could be set into the walls 10A, 10C and top panel and base panel 8 of the oven 2 rather than being set into the door 4.

A further seal 36, referred to herein as an internal seal 36, is included in the door 4. The internal seal 36 is operable, when the internal panel 18 is in the extended position to seal a door cavity 38 within the door 4 from the oven cavity 6, said door cavity 38 being a cavity between the internal panel 18 and the external panel 16 of the door 4 in which the compressible insulation layer 4 is disposed. This ensures that humidity from within the oven cavity 6 does not enter the door cavity 38 and thereby reduce the effectiveness of the insulation. Such an effect is particularly useful when the oven 2 is a steam oven, because the humidity in the oven cavity 6 can be particularly high. The most effective sealing is used when the internal panel 18 is in the extended position because that is the position which the internal panel 18 will be in most of the time when the door is closed 4. Furthermore, when the insulation layer 26 is compressed its propensity to absorb moisture is reduced.

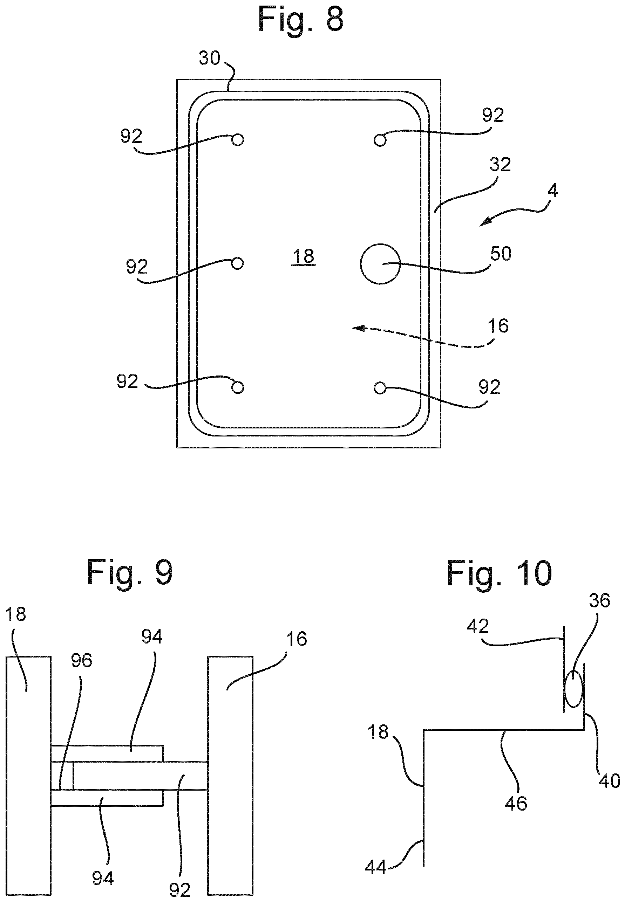

The internal seal 36 is configured to engage with a rim 40 of the internal panel 18 and a part 42 of the door frame 14 when the internal panel 18 is in the extended position. Figure 10 illustrates in isolation the interaction between the internal seal 36, the rim 40 of the internal panel 18 and the part 42 of the door frame 14. As can be seen in figure 10, the rim 40 of the internal panel 18 is connected to a main face 44 of the internal panel 18 by a connecting flange 46. The rim 40 extends around the entire periphery of the internal panel 18.

The door panel 4 as illustrated also includes a secondary seal 37. The secondary seal 37 is operable, when the internal panel 18 is in the retracted position, to seal the door cavity 38 within the door 4 and thereby prevent humidity from either the oven cavity 6 or from external to the oven 2 from entering the door cavity 38 in which the insulation layer 26 is disposed.

The secondary seal 37 is configured to engage with the rim 40 of the internal panel 18, on the opposite side to which the internal seal 36 engages, and with a part 41 (or a shoulder 41) of the door panel 16. The secondary seal 37 can be seen in a sealing, or compressed, state in Figure 2A, and in a non-sealing state in Figure 2B.

The secondary seal 37 as illustrated is mounted to part 41 of the door panel 16; however, it should be appreciated that the secondary seal 37 could instead be mounted to the rim 40 of the internal panel 18.

The secondary seal 37 as illustrated functions in a similar way to internal seal 36, as illustrated further at figure 10; however, it could function with different mechanisms. Each of the internal seal 36 and the secondary seal may be O-ring seals, or could have alternative seal shapes, such as split ring seals.

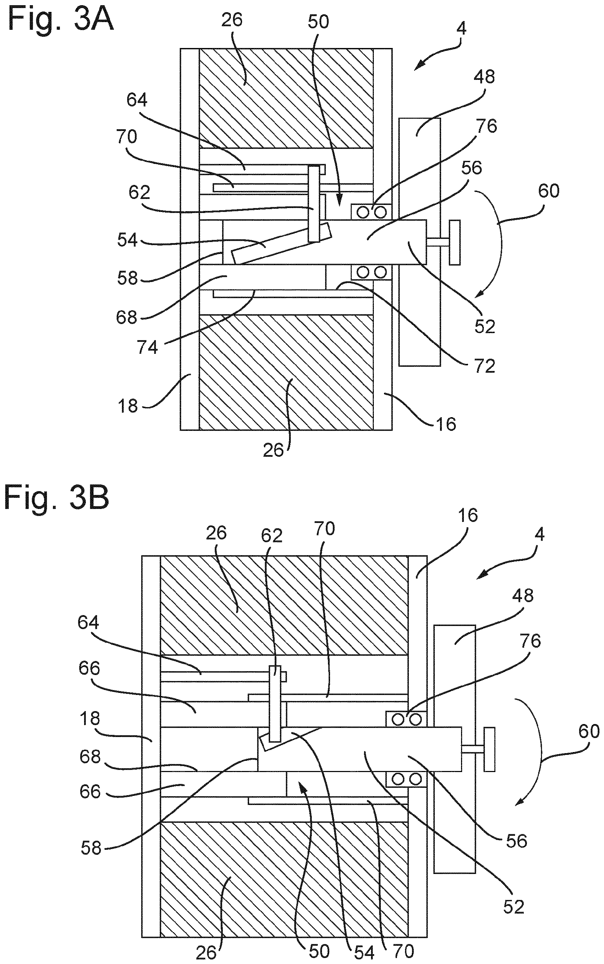

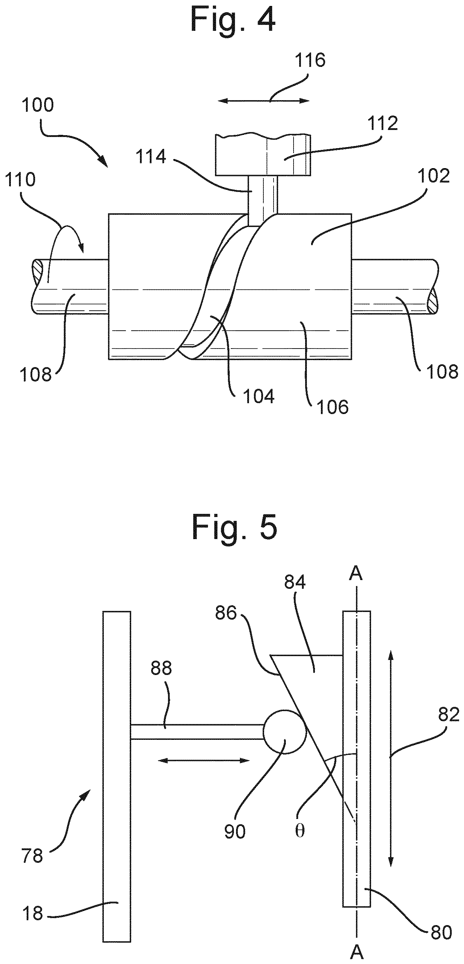

With reference to figures 3A, 3B and figure 4, one exemplary mechanism for driving the movement of the internal panel 18 is described.

This mechanism is a cylindrical cam-based mechanism, which is illustrated simply in figure 4. A cylindrical cam mechanism 100 includes a shaft 102 having a helical groove in an outer surface thereof. The shaft 102 of figure 4 has narrower input shafts 108 at each end configured to be driven in a rotational movement, shown by arrow 110. The cam mechanism 100 includes a cam follower 112, which includes a follower pin 114 (which may be referred to simply as a pin). The cam follower 112 and the follower pin 114 remain in the same radial position while the shaft 102 rotates. In response to rotational movement of the shaft 102, the follower pin 114 is therefore guided by the groove 104 in an axial direction, represented in figure 4 by arrow 116. The angle of the groove 104 with respect to the axis of the shaft 102 determines the relationship between the extent of rotation of the shaft 102 and the distance of travel of the cam follower 112.

Figures 3A and 3B show the door 4 applying that principle. The door 4 includes a handle 48. The handle 48 may be rotated by a user to open a latch mechanism (not illustrated) enabling the door 4 to be opened. The latch mechanism has a latch with a locked state and an unlocked state, wherein in the locked state the latch holds the door 4 in the closed position and in the unlocked state the door 4 is freely movable between the closed position and the open position. Attached to the handle 48 is a cylindrical cam mechanism 50. The cylindrical cam mechanism 50 has a shaft 52 configured to rotate with the handle 48 and including a helical groove 54 disposed in a surface 56 of the shaft 54 toward a distal end 58 thereof. The handle 48 and the shaft 52 together rotate as illustrated by arrow 60. The cylindrical cam mechanism 50 includes a cam follower 62 in the form of pin 62. Pin 62 is attached to the internal panel 18 by a pin guide 64.

The door 4 also includes supports and bearings to assist the cam mechanism 50. Namely, the door 4 includes a barrel 66 attached to the internal panel 18, wherein the barrel 66 is sized and located to slidably receive the shaft 52. To that end the barrel 66 is a cylindrical tube with an internal bore having a diameter very slightly larger than (e.g., by about 1 mm) the diameter of the shaft 52. Further, the door includes a slide bearing 70 sized and located to slidably receive the barrel 66. That is, the slide bearing 70 has an internal bore 72 with a diameter very slightly larger than (e.g., by about 1 mm) an outer diameter 74 of the barrel 66. The door 4 as illustrated includes a bearing 76 supported by the external panel 16. Alternatively, the door 4 could be designed so as to have members of the door frame 14 located to support the bearing 76, instead of the external panel, which may provide additional structural support.

In use, starting from the position in figure 3B, when the door handle 48 is rotated to open the latch mechanism, this rotates the shaft 50 and its groove 54. This in turn causes the cam follower pin 62 to move proximally, which, via a load path through the pin guide 64, causes the internal panel 18 to move proximally to the retracted position. In doing so, the insulation layer 26 is compressed, thereby leading to the configuration at figure 3A.

After this, the door 4 can be opened and the oven cavity 6 is thereby made accessible.

Then, the door 4 may be closed and starting from figure 3A, the handle may be rotated the other way to close the latch mechanism. This rotates the shaft 50 and its groove 54 the other way, which in turn causes the cam follower pin 62 to move distally. Via a load path through the pin guide 64 (the same as the earlier load path, but the forces reversed), the internal panel 18 is thus caused to move distally to the retracted position, and, in doing so, expands the insulation layer 26 to arrive at the position of figure 3B.

As will be appreciated, this mechanism is only one example of how the movable internal panel 18 may be actuated.

Illustrated in figure 5 is an alternative mechanism, namely a linear cam mechanism 78. Linear cam mechanism is arranged to operate with a latch rod 80. Latch rod 80 is part of a latch mechanism (not illustrated), which moves axially along an axis A of the latch rod 80 is part of the operation of the latch mechanism as represented by arrow 82. The precise details of the latch mechanism are ancillary to this disclosure and so not set out in detail here. The linear cam mechanism 78 includes an angled feature 84, which as illustrated is a wedge 84 providing an angled surface 86. The angled feature 84 is attached to the latch rod 80 so as to move axially therewith. The angled surface is angled with respect to the axis A of the latch rod 80 by an angle θ. The linear cam mechanism 78 includes a follower 88 attached to the internal panel 18 and biased in a proximal direction toward the external panel 16 by a resilient member such as a spring (not illustrated). Accordingly, the follower 88 is biased into contact with the angled feature 84. The follower 88 as illustrated includes a contact bumper 90 in contact with the angled surface 86 of the angled feature 84. Alternatively, a roller could be used in place of the contact bumper 90, or a lug could be used and disposed within a track forming part of the angled member. In some arrangements, the track could include retaining flanges to retain the lug within the track, and in those arrangements the resilient member would not be required.

As the latch rod 80 moves axially, its axial movement results in distal or proximal movement (or, in the arrangements including the resilient member, allows proximal movement) of the follower 88 and accordingly of the internal panel 18. Such movement of the internal panel causes compression and expansion of the insulation layer 26 (not includes in figure 5 for illustrative purposes).

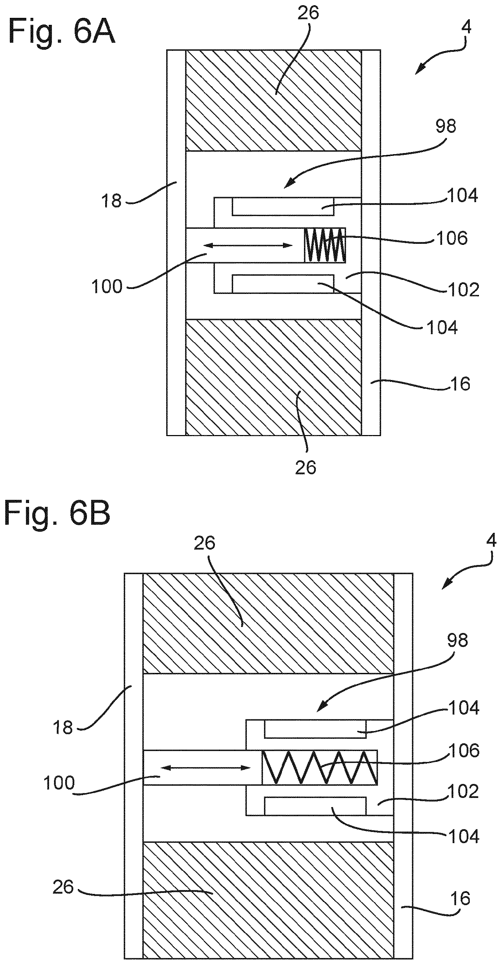

Alternative mechanisms are also contemplated. For example, a linear solenoid actuator mechanism 98 as illustrated in figures 6A and 6B could be used to move the internal panel 18 in proximal or distal directions in response to user inputs. Such user inputs may be linked to the operation of a door handle (not shown in figures 6A and 6B), for example via one or more microswitches, or could be controlled separately, via other user inputs such as push switches, touch-sensitive buttons or touchscreens, or via a wireless control system. As will be understood, the linear solenoid actuator mechanism 98 may be located in a different location to a door handle. The activation of the linear solenoid actuator mechanism 98 to expand the insulation 26 could be set up to follow the start of a cooking program in some examples. Alternatively, the activation could be triggered by a door sensor switch when the latch is placed in a locked position.

Figure 6A shows the door 4 with the linear solenoid actuator mechanism 98 compressing the insulation layer 26 and the internal panel 18 in the retracted position and figure 6B shows the door 4 with the linear solenoid actuator mechanism 98 in a de-energised state and accordingly the insulation layer 26 in its expanded state with the internal panel 18 in the extended position.

The solenoid actuator mechanism 98 includes a plunger 100 configured to slide axially in proximal and distal directions within a solenoid housing 102. The plunger 100 is affixed to move with the internal panel 18 and the solenoid housing 102 is affixed to move with the external panel 16. It will be appreciated that these could be reversed, i.e., the plunger 100 affixed to the external panel 16 and the solenoid housing 102 affixed to the internal panel 18.

The solenoid housing 102 includes coils 104 which, when energised act as an electromagnet to pull the plunger 100 further into the solenoid housing 102. The plunger 100 is accordingly formed from a ferromagnetic or ferrimagnetic material. The solenoid actuator mechanism 98 includes a resilient member 106, illustrated as a spring 106. The resilient member 106 is configured to bias the plunger 100 in the distal direction so as to place the internal panel 18 in the extended position when the coils 104 are not energised (see figure 6B).

When the coils 104 are energised the plunger 100 moves proximally and the resilient member 106 is compressed (see figure 6A). the insulation layer 26 is also compressed in this state.

It will be appreciated that only one such arrangement of a linear solenoid actuator mechanism 98 is illustrated here. Alternative arrangements may be used, for example, multiple linear solenoid actuators could be used distributed across the door 4, or an extended stroke linear solenoid actuator could be used in some situations.

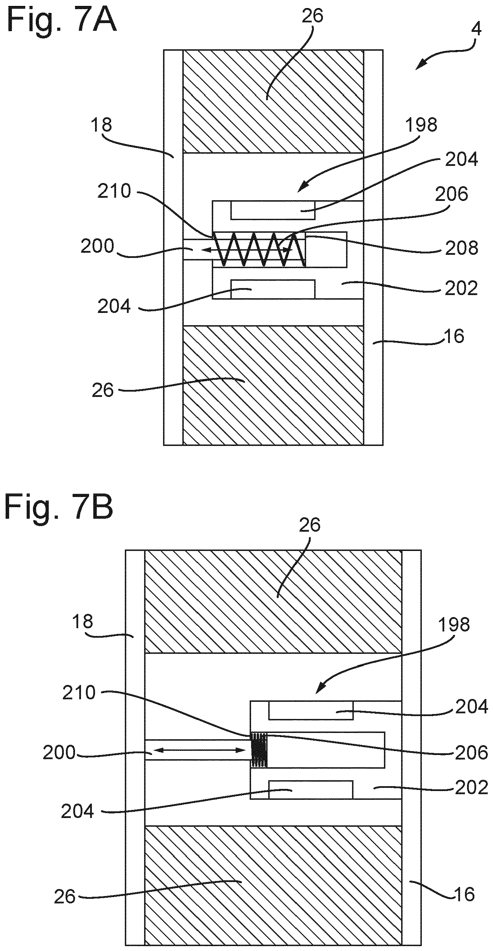

One alternative arrangement of a linear solenoid mechanism 198 is shown in figures 7A and 7B, the differences with the linear solenoid mechanism 98 of figures 6A and 6B described below.

The linear solenoid mechanism 198 of this arrangement includes a plunger 200, a solenoid housing 202, coils 204, and a resilient member 206.

In contrast to the arrangement of figures 6A and 6B, this linear solenoid mechanism 198 acts to expand the insulation layer 26 when the coils 204 are energised and to compress the insulation layer 26 by the biasing from the resilient member 206 when the coils 204 are de-energised.

To that end, the illustrated plunger 200 is narrower than the plunger 100, and narrower than the space or bore within the solenoid housing 202. The plunger 200 as shown includes a proximal engagement feature 208 for engagement with the resilient member 206. The proximal engagement feature 208 may be a flange extending laterally at the proximal end of the plunger 200, or it could be a lug adhered to a part of the resilient member 206. At the distal end of the solenoid housing 202, there may be provided a distal engagement feature 210 affixed to the solenoid housing 202 and for engagement with the resilient member 206. The distal engagement feature 210 may be a shoulder extending inwards from part of the solenoid housing 202.

As in the arrangement of figures 6A and 6B, the resilient member 206 of figures 7A and 7B may be a spring, such as a helical spring, or a stack of Belleville springs or washers.

When the coils 204 are energised, a magnetic force is exerted on the plunger 200 to move it distally, partially out of the solenoid housing 202. The plunger 200 is affixed to the internal panel 18 and so in turn moves the internal panel 18 distally, which expands the insulation layer 26. When the coils 204 are de-energised, the resilient member 206 pushes the plunger 200 in a proximal direction back further into the solenoid housing 202, thereby compressing the insulation layer.

As shown in figures 8 and 9, the door includes a plurality of guide pins 92 and guide slide bearings 94 each configured to slidably receive a respective one of the guide pins 92. To that end, the guide slide bearings 94 are tubes and have an inner bore 96 having a diameter very slightly larger the outer diameter of the respective guide pin 92.

As will be appreciated, guide slide bearings 94 could instead be a set of secondary pins arranged to engage with the guide pins 92, rather than tubes.

The guide pins 92 and guide slide bearings 94 ensure the movement of the internal panel 18 is square with respect to the external panel 16, and that the door 4 maintains desired structural rigidity.

While embodiments have been described above and herein, it should be understood that various modifications may be made thereto or alternatives used following the same principles of the disclosure.

## Claims

1. A door (4) for an aircraft galley oven (2) comprising:
a frame (14);
an external panel (16) fixed to the frame (14);
an internal panel (18) selectively moveable proximally and distally with respect to the frame (14) between a retracted position and an extended position; and
a reversibly compressible insulation layer (26) between the external panel (16) and the internal panel (18) and fixed to the external panel (16) and the internal panel (18), wherein the compressible insulation layer (26) is compressed when the internal panel (18) is in the retracted position and expanded when the internal panel (18) is in the extended position.

2. The door of claim 1, comprising a door handle (48) configured for selectively latching and unlatching the door (4) and for selectively opening and closing the door (4), wherein the selective movement of the internal panel (18) is controlled by operation of the door handle (48).

3. The door of claim 2, wherein the door handle (48) is operated by rotational movement, wherein the door (4) comprises:
a shaft (52) attached to the door handle (48) and rotatable with the door handle (48), the shaft (52) extending through the external panel (16);
a barrel (66) attached to the internal panel (18), the barrel (66) extending toward the external panel (16) and sized to slidably receive the shaft (52);
a slide bearing (70) attached to the external panel (16) or the door frame (14), the slide bearing (70) extending toward the internal panel (18) and sized to slidably received the barrel (66); and
a cylindrical cam mechanism (50) including a helical groove (54) disposed in a surface (56) of the shaft (52) and a pin (62) fixed with respect to the internal panel (18) extending through an opening in the slide bearing (70) and into the groove (54) for engagement therewith,
wherein, upon rotation of the door handle (48), the shaft (52) rotates, which causes the helical groove (54) to move the pin (62) axially, and thereby the internal panel (18) to move between the extended and retracted positions to expand and compress the reversibly compressible insulation layer (26) respectively.

4. The door of claim 3, wherein the door (4) comprises a pin guide (64) attached to the internal panel (18), the pin guide (64) extending toward the external panel (16) and supporting the pin (62).

5. The door of claim 3 or 4, comprising a bearing (76) disposed in the external panel (16) around the shaft (52) for supporting the shaft (52).

6. The door of claim 2, including a latch mechanism including a latch rod (80) configured to be driven by the handle (48) to move axially along an axis (A) of the latch rod (80) when the handle (48) is moved by a user, wherein the latch rod (80) includes a linear cam mechanism, the linear cam mechanism (78) including:
an angled feature (84) disposed on the latch rod (80) and angled with respect to the axis (A) of the latch rod (80); and
a follower (88) protruding from the internal panel (18) and configured to engage the angled feature (84) such that upon axial movement of the latch rod (80), the follower (88) and internal panel (18) move proximally or distally between the extended and retracted position dependent on the direction of the axial movement of the latch rod (80).

7. The door of claim 6, wherein the angled feature (84) comprises a wedge (84) affixed to the latch rod (80) providing an angled surface (86), and wherein the linear cam mechanism (78) further comprises a resilient member configured to bias the follower (88) toward the external panel (16) and accordingly bias the internal panel (18) toward the retracted position.

8. The door of claim 6, wherein the angled feature comprises a track having retaining flanges, and the follower comprises a lug disposed within the track and retained therein by the retaining flanges.

9. The door of claim 1, comprising:
a linear solenoid actuator (98);
a resilient member (106); and
a user input for controlling the linear solenoid actuator (98),
wherein the selective movement of the internal panel (18) is controlled by the linear solenoid actuator (98), the internal panel (18) being moved to one of the retracted or extended positions when the linear solenoid actuator (98) is energised and being moved to or held in the other of the retracted or extended positions by the resilient member (106) when the linear solenoid actuator (98) is de-energised.

10. The door of claim 9, wherein the door (4) comprises a door handle (48) configured for selectively latching and unlatching the door (4) and for selectively opening and closing the door (4), wherein the user input is controlled by operation of the door handle (48).

11. The door of any preceding claim, further comprising an internal seal (36) for sealing between the internal panel (18) and the door frame (14) when the internal panel (18) is in the extended position, to provide a sealed door cavity (38) delimited by the internal panel (18), the external panel (16) and the door frame (14) in which the reversibly compressible insulation layer (26) is disposed.

12. The door of any preceding claim, further comprising a secondary seal (37) for sealing between the external panel (16) and the internal panel (18) when the internal panel (18) is in the retracted position, to provide a sealed door cavity (38) delimited by the internal panel (18), the external panel (16) and the door frame (14) in which the reversibly compressible insulation layer (26) is disposed.

13. The door of any preceding claim, comprising:
a plurality of guide pins (92) affixed to one of the internal panel (18) and the external panel (16) distributed across said one of the internal panel (18) and the external panel (16); and
a plurality of guide slide bearings (94) affixed to the other of the internal panel (18) and the external panel (16), each of the plurality of guide slide bearings (94) configured to slidably receive a respective one of the plurality of guide pins (92).

14. The door of any preceding claim, wherein:
when the internal panel (18) is in the retracted position, the reversibly compressible insulation layer (26) has a compressed thickness (T_{C}); and
when the internal panel (18) is in the extended position, the reversibly compressible insulation layer (26) has an expanded thickness (T_{E}), wherein the expanded thickness (T_{E}) is between 1.5 times the compressed thickness (Tc) and 2 times the compressed thickness (Tc).

15. An aircraft galley oven (2), the aircraft galley oven (2) comprising:
a base panel (8);
a top panel;
a plurality of wall panels (10A, 10B, 10C);
an oven cavity (6) defined by the base panel (8), the top panel, and the wall panels (10A, 10B, 10C);
the door (4) of any preceding claim;
a hinge (12), hinging the door (4) to one of the plurality of wall panels (10A, 10B, 10C) or to the base panel (8) or the top panel, such that the door (4) is moveable between a closed position, closing the oven cavity (6), and an open position, opening the oven cavity (6); and
a latch having a locked state and an unlocked state, wherein in the locked state the latch holds the door (4) in the closed position and in the unlocked state the door (4) is freely movable between the closed position and the open position,
wherein, the oven (2) is configured such that when the latch is in the unlocked state the internal panel (18) is in the retracted position and when the latch is in the locked state the internal panel (18) is in the extended position.
